# EUROPEAN PATENT SPECIFICATION

(11) **EP 4 069 998 B1**
(45) Date of publication and mention of the grant of the patent: **06.03.2024**
(21) Application number: 19813826.5
(22) Date of filing: 03.12.2019
(51) Int. Cl.: H01G 5/011, H01H 33/662, H01G 5/00, F16J 3/04

(54) **A BELLOWS FOR A VACUUM INTERRUPTER, EXHAUST COMPENSATOR OR VALVE**
FALTENBALG FÜR VAKUUMSCHALTER, ABGASKOMPENSATOR ODER VENTIL
SOUFFLET POUR INTERRUPTEUR À VIDE, POUR COMPENSATEUR D'ÉCHAPPEMENT OU POUR SOUPAPE

(43) Date of publication of application: 12.10.2022
(73) Proprietor: ABB Schweiz AG, 5400 Baden (CH)
(72) Inventor: GENTSCH, Dietmar, 40882 Ratingen (DE); BOYACI, Aydin, 76337 Waldbronn (DE); REUBER, Christian, 47877 Willich (DE)
(74) Representative: Maiwald GmbH
(86) International application number: PCT/EP2019/083518
(87) International publication number: WO 2021/110248

(56) References cited:
- CN-U- 206 225 280
- DE-A1-102008 017 599
- US-A1- 2002 159 221
- US-A1- 2014 082 906
- US-A1- 2014 083 288

## Description

### FIELD OF THE INVENTION

The present invention relates to a bellows for a vacuum interrupter, exhaust compensator or valve.

### BACKGROUND OF THE INVENTION

US2014/083288A1 describes thqat a conductive coating layer is formed on at least one of an inner peripheral side and an outer peripheral side of a base body of bellows by diffusion-bonding. Regarding the diffusion-bonding, it is described that the flat conductive coating layer is layered on at least one end surface side of the plate-shaped base body, and these base body and conductive coating layer are diffusion-bonded. It is described that after forming this diffusion-bonded multilayer member into a tubular body by a drawing process, a side wall of the tubular body is formed into a bellows shape. It is described that with these processes, it is possible to obtain the bellows that has the conductive coating layer having a more uniform thickness on the base body of the bellows and has extremely good mechanical characteristics and electric characteristics.

CN206225280U describes a high pressure vacuum interrupter for vacuum circuit breaker, including moving conducting rod, quiet conducting rod, bellows, quiet end cover, moving end cover, static contact, moving contact and shell. It is described that the bellows comprises the titanium alloy, be equipped with the polytetrafluoroethylene lining in the bellows, the polytetrafluoroethylene lining is pasted on the bellows inner wall, the polytetrafluoroethylene lining is formed through high temperature high pressure hot melt complex by the glass fiber cloth and the outer polytetrafluoroethylene layer of inlayer, scribble the antirust coat on the outer wall of bellows, the antirust coat outside is equipped with the heat dissipation layer, the heat dissipation course is moved end cover one side and is extended to and move on the conducting rod.

US2002/159221A1 relates to a bellows in a vacuum capacitor, whose bellows structure comprises a carrier material and at least one electrically conductive layer, whereby the latter has a uniform thickness over the entire bellows structure. It is described that the deviations of the layer thickness from the mean are less than ±50% and preferably less than ±10%. It is described that this results in an increased life span with mechanical loading, and that in order to increase the heat emission through radiation, the bellows structure has an additional dark layer.

US2014/082906A1 An accordion-structured welded bellows for a semiconductor-manufacturing device is characterized in that a plurality of annular bellows plates having curved surfaces in a radial direction are connected in an alternating fashion on the outside-diameter side and the inside-diameter side, wherein the annular bellows plates have a processing-side bellows plate and a non-processing-side bellows plate, a gas layer is interposed between the two bellows plates, the processing-side bellows plate is configured as a thick plate, and the non-processing-side bellows plate is configured as a thin plate. The welded bellows is less likely to be damaged by foreign matter and to be able to use the non-processing-side bellows plate to compensate for any damage to the processing-side bellows plate.

DE102008017599A1 describes a multi-layer metal bellows, as a flexible line element for motor vehicle applications.

Low voltage (LV), medium voltage (MV) and high voltage (HV) vacuum interrupters (VI) usually are provided with bellows to seal the inner vacuum and for the moveable contact. The bellows are subjected to frequent operations, especially at relatively high strokes, operating speeds and vibrations. Regarding the mechanical life of a VI, the bellows are often the part of the VI that limits the lifetime of the VI. The same applies to bellows used for exhaust compensators and valves, where the bellows for these devices can also be the limiting factor for the lifetime of such devices.

There is a need to address this problem.

### SUMMARY OF THE INVENTION

Therefore, it would be advantageous to have an improved bellows for a vacuum interrupter, exhaust compensator or valve.

The object of the present invention is solved with the subject matter of the independent claims, wherein further embodiments are incorporated in the dependent claims.

Claim 1 defines a bellows for a vacuum interrupter, exhaust compensator or valve. Claim 11 defines a vacuum interrupter, exhaust compensator or valve. The invention and its scope of protection is defined by these independent claims. The following aspects and examples of the disclosure provide examples of how technical subject matters can be combined.

In an aspect, there is provided a bellows for a vacuum interrupter, exhaust compensator or valve, the bellows comprising:
- a main body comprising a first material.

The main body comprises a first end portion and comprises a second end portion. The first end portion is configured to be connected to a first part of a vacuum interrupter, exhaust compensator or valve. The second end portion is configured to be connected to a second part of the vacuum interrupter, the exhaust compensator or the valve. The main body comprises a flexible section. The flexible section is configured such that the first end portion can move relative to the second end portion. At least a portion of an inner surface of the flexible section comprises a second material different to the first material; and/or at least a portion of an outer surface of the flexible section comprises the second material.

In an example, the first material is stainless steel.

In an example, a thickness of the second material is in the range from 0.5µm to 100 µm.

In an example, a thickness of the second material for the inner surface is different to a thickness of the second material for the outer surface.

In an example, a thickness of the second material for the inner surface is the same as a thickness of the second material for the outer surface.

In an example, a hardness of the second material is less than a hardness of the first material.

In an example, the bellows is for a vacuum interrupter, and the second material comprises a galvanic coating of: gold, silver, chromium or nickel.

In an example, the bellows is for an exhaust compensator or valve, and the second material comprises a galvanic coating of: gold, silver, chromium, nickel zinc or tin.

In an example, the second material is formed from a surface treatment of the first material.

In an example, at least a portion of the inner surface of the flexible section comprises a third material different to the first material and different to the second material; and/or at least a portion of the outer surface of the flexible section comprises the third material.

In an example, the at least a portion of the inner surface of the flexible section that comprises the second material also comprises the third material; and/or the at least a portion of the outer surface of the flexible section that comprises the second material also comprises the third material.

In an example, a thickness of the third material is in the range from 0.5µm to 100 µm.

In an example, a thickness of the third material for the inner surface is different to a thickness of the third material for the outer surface.

In an example, wherein a thickness of the third material for the inner surface is the same as a thickness of the third material for the outer surface.

In an example, a hardness of the third material is less than a hardness of the first material.

In an example, the bellows is for a vacuum interrupter and wherein the third material comprises a galvanic coating of: gold, silver, chromium or nickel.

In an example, the bellows is for an exhaust compensator or valve and wherein the third material comprises a galvanic coating of: gold, silver, chromium, nickel zinc or tin.

In an example, the third material is formed from a surface treatment of the first material.

In an other aspect, there is provided a vacuum interrupter, exhaust compensator or valve, comprising a bellows according to the first aspect.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Figure. 1 shows a cross-section through an example of a vacuum interrupter in an open position with an example of a bellows as described here;
Figure. 2 shows an example of a bellows as described here, with a cross section and expanded view also shown; and
Figure. 3 shows an example of a bellows as described here, with a cross section and expanded view also shown.

### DETAILED DESCRIPTION OF EMBODIMENTS

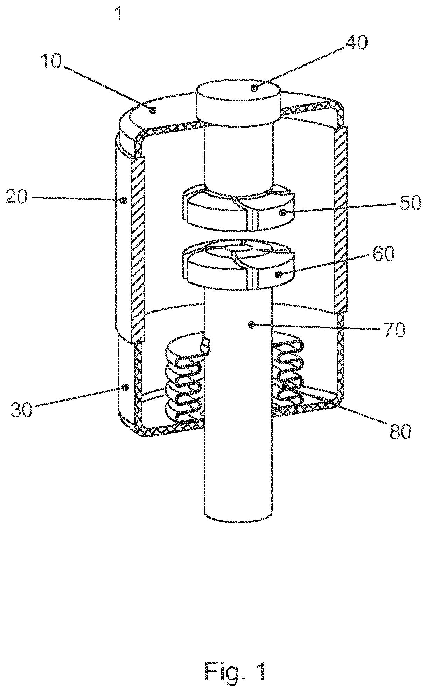

Figures 1-3 relate to a bellows for a vacuum interrupter, exhaust compensator or valve. In an example, the bellows comprises a main body comprising a first material. The main body comprises a first end portion and comprises a second end portion. The first end portion is configured to be connected to a first part of a vacuum interrupter, exhaust compensator or valve. The second end portion is configured to be connected to a second part of the vacuum interrupter, the exhaust compensator or the valve. The main body comprises a flexible section. The flexible section is configured such that the first end portion can move relative to the second end portion. At least a portion of an inner surface of the flexible section comprises a second material different to the first material. Additionally or alternatively at least a portion of an outer surface of the flexible section comprises the second material.

Reference is made here to a bellows for a vacuum interrupter, exhaust compensator or valve, however that does not mean that exactly the same bellows could be fitted to the vacuum interrupter, exhaust compensator or valve. Rather, the bellows having the structural features as described could in different forms be utilised with a vacuum interrupter, exhaust compensator or valve.

According to an example, the first material is stainless steel.

According to an example, a thickness of the second material is in the range from 0.5µm to 100 µm.

According to an example, when both the inner and outer surfaces or portions of those services comprise a second material, a thickness of the second material for the inner surface is different to a thickness of the second material for the outer surface. However, alternatively a thickness of the second material for the inner surface can be the same as a thickness of the second material for the outer surface.

According to an example, a hardness of the second material is less than a hardness of the first material.

According to an example, the bellows is for a vacuum interrupter. In this example, the second material can comprise a galvanic coating of: gold, silver, chromium or nickel.

According to an example, the bellows is for an exhaust compensator or valve. In this example, the second material can comprise a galvanic coating of: gold, silver, chromium, nickel zinc or tin.

However, according to an example the second material need not be a coating but can be formed from a surface treatment of the first material.

According to an example, at least a portion of the inner surface of the flexible section comprises a third material different to the first material and different to the second material. Additionally or alternatively at least a portion of the outer surface of the flexible section comprises the third material.

According to an example, the at least a portion of the inner surface of the flexible section that comprises the second material also comprises the third material. Additionally or alternatively the at least a portion of the outer surface of the flexible section that comprises the second material also comprises the third material.

According to an example, a thickness of the third material is in the range from 0.5µm to 100 µm.

According to an example, when the inner and outer surfaces the least portion of the bellows comprises the third material, a thickness of the third material for the inner surface is different to a thickness of the third material for the outer surface. Alternatively, a thickness of the third material for the inner surface can be the same as a thickness of the third material for the outer surface.

According to an example, a hardness of the third material is less than a hardness of the first material.

According to an example, the bellows is for a vacuum interrupter and the third material can comprise a galvanic coating of: gold, silver, chromium or nickel.

According to an example, the bellows is for an exhaust compensator or valve and the third material can comprise a galvanic coating of: gold, silver, chromium, nickel zinc or tin.

According to an example, the third material need not be a coating and the third material can be formed from a surface treatment of the first material.

From the above description, it is clear that A vacuum interrupter, exhaust compensator or valve can have a bellows as described above.

When, the bellows is used for a vacuum interrupter the first end portion of the bellows can be connected to a moveable contact carrier of a vacuum interrupter, and the second end portion of the bellows can be connected to a lower lid of the vacuum interrupter. The skilled person would appreciate that the bellows could be connected elsewhere, whilst maintaining vacuum integrity during movement of the movable contact.

The usual main material for bellows is stainless steel. It is compatible with the high temperatures in a vacuum oven for the manufacturing of the VI and it provides a good corrosion protection. It is further a material that provides the required mechanical stiffness and structure to withstand the vacuum forces and to enable a reasonable mechanical life for many of today's applications like e.g. distribution circuit breakers (CBs). For other applications, like e.g. CBs that operate arc furnaces several times a day or contactors, the mechanical life is too short or complex drives have to be used to operate the Vls smoothly.

The inventors realised that by coating the bellows with a second material, the mechanical stress at the most exposed regions of the bellows could be reduced. The event is also realised that the stainless steel can be surface treated to change the properties of the surface to provide a similar or same effect. Those regions where cracks in the relatively hard stainless steel form, are then covered with a second material that distributes the mechanical stress. The final structure is a sandwich structure where both layers can combine their specific advantages for an improved mechanical life of the bellows - the stainless steel provides the stability and the coating reduces the risk that the bellows become brittle after many operations. Cracks that begin to form cannot then easily travel through the total wall thickness of the bellows formed from the main material undercoating, as a different crystalline structure at the border between the two materials is an obstacle for the progression of cracks.

The coating can also be used to increase the mechanical stiffness of the bellows, e.g. to increase the pressure that can be withstood.

The inventors also realised that the bellows has applicability not just for vacuum interrupters, but also can be applied to other devices such as exhaust compensators or valves. Thus for these devices, the bellows can be fortified and / or their mechanical lifetime can be increased using the above described coating.

Again, the above advantages provided for the surface treated stainless steel main body, in addition to the coated main body. Also, it is possible to use other main body materials to stainless steel, and still coat those materials as described above. It is anticipated that surface treatment of these of the materials will also then be possible to provide the same advantages.

Continuing with the figures, Figure 1 shows a cross-section of a VI in open position. When the VI is closed, the current is conducted by the fixed contact carrier 40, the fixed contact piece 50, the movable contact piece 60 and the movable contact carrier 70. The vacuum is kept inside by the surrounding shell that consists of the upper lid 10, the insulator 20, the lower lid 30 and the bellows 80. The bellows 80 is the new bellows as described above, and as described in more detail below.

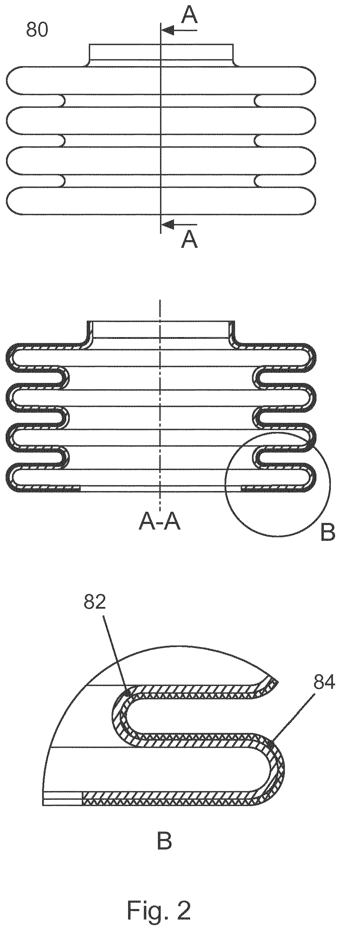

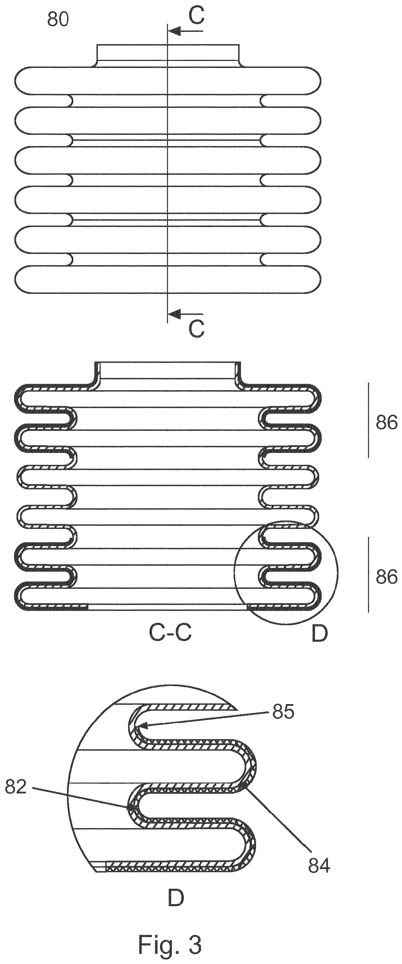

Figure 2 shows an example of such a bellows 80. It basically consists of a main material 82 and in this example the outside 82 of the main body 80 is coated with a coating material 84. The coating can also be limited to a certain region of the inside or the outside of the bellows, as shown in Figure 3, where only the upper end and the lower end of the outside of the bellows are coated. Coating 84 ends (or begins; a matter of perspective) at the location 85. The coated regions are shown in more detail at the expanded portion 86. The purpose of a partial coating can be to protect only the mechanically most loaded regions of the bellows.

Suitable coatings are galvanic coatings of e.g. gold, silver, chromium and nickel. For VI applications metals like zinc or tin are not suitable because of the high temperatures during the manufacturing process of the VI. However, for applications like valves or exhaust compensators, also these metals are suitable.

### The following provides specific details relating to specific possible embodiments.

A suitable thickness of such a galvanic coating is 0.5µm to 100µm.

As an example, the inside of the bellows is coated.

As an example, the outside of the bellows is coated.

As an example, both the inside and the outside of the bellows are coated with the same material and with the same thickness or with different thicknesses.

As an example, both the inside and the outside of the bellows are coated with different materials and with the same thickness or with different thicknesses.

As an example, the inside and / or the outside of the bellows are coated with more than one material, e.g. a combination of nickel as the first coating and chrome as the second coating on the same side of the bellows.

As an example, the inside and/or the outside of the bellows are partly coated.

As an example, the hardness of the coating is lower than the hardness of the bellows.

Also as described above, rather than coating inner and/or outer surfaces or portions of those services of the main body material of the bellows, such as stainless steel, the outer surface of the stainless steel can be treated to changes properties in order to provide the above described advantages.

### Reference numerals

1 Vacuum Interrupter (VI )
10 Upper lid
20 Insulator
30 Lower lid
40 Fixed contact carrier
50 Fixed contact piece
60 Movable contact piece
70 Movable contact carrier
80 Bellows
82 Main material of bellows 80
84 Coating of bellows 80
85 End / beginning of a partial coating
86 Region of a partial coating

## Claims

1. A bellows (80) for a vacuum interrupter, exhaust compensator or valve, the bellows comprising:
- a main body comprising a first material (82);
wherein the first material is stainless steel;
wherein, the main body comprises a first end portion and comprises a second end portion;
wherein, the first end portion is configured to be connected to a first part of a vacuum interrupter, exhaust compensator or valve;
wherein, the second end portion is configured to be connected to a second part of the vacuum interrupter, the exhaust compensator or the valve;
wherein, the main body comprises a flexible section;
wherein, the flexible section is configured such that the first end portion can move relative to the second end portion;
wherein at least a portion of an inner surface of the flexible section comprises a second material (84) different to the first material; and/or wherein at least a portion of an outer surface of the flexible section comprises the second material;
wherein the bellows is for a vacuum interrupter and wherein the second material comprises a galvanic coating of: chromium or nickel; or wherein the bellows is for an exhaust compensator or valve and
wherein the second material comprises a galvanic coating of: chromium, nickel zinc or tin; **characterized in that** at least a portion of the inner surface of the flexible section comprises a third material different to the first material and different to the second material; and/or wherein at least a portion of the outer surface of the flexible section comprises the third material.

2. Bellows according to claim 1, wherein a thickness of the second material is in the range from 0.5µm to 100 µm.

3. Bellows according to any of claims 1-2, wherein a thickness of the second material for the inner surface is different to a thickness of the second material for the outer surface; or wherein a thickness of the second material for the inner surface is the same as a thickness of the second material for the outer surface.

4. Bellows according to any of claims 1-3, wherein a hardness of the second material is less than a hardness of the first material.

5. Bellows according to any of claims 1-4, wherein the at least a portion of the inner surface of the flexible section that comprises the second material also comprises the third material; and/or the at least a portion of the outer surface of the flexible section that comprises the second material also comprises the third material.

6. Bellows according to any of claims 1-5, wherein a thickness of the third material is in the range from 0.5µm to 100 µm.

7. Bellows according to claim 6, wherein a thickness of the third material for the inner surface is different to a thickness of the third material for the outer surface; or wherein a thickness of the third material for the inner surface is the same as a thickness of the third material for the outer surface.

8. Bellows according to any of claims 1-7, wherein a hardness of the third material is less than a hardness of the first material.

9. Bellows according to any of claims 1-8, wherein the bellows is for a vacuum interrupter and wherein the third material comprises a galvanic coating of: gold, silver, chromium or nickel; or wherein the bellows is for an exhaust compensator or valve and wherein the third material comprises a galvanic coating of: gold, silver, chromium, nickel zinc or tin.

10. Bellows according to any of claims 1-9, wherein the third material is formed from a surface treatment of the first material.

11. A vacuum interrupter, exhaust compensator or valve, comprising a bellows according to any of claims 1-10.

## Patentansprüche

1. Faltenbalg (80) für einen Vakuumschalter, einen Abgaskompensator oder ein Ventil, wobei der Faltenbalg umfasst:
einen Hauptkörper umfassend ein erstes Material (82);
wobei das erste Material rostfreier Stahl ist;
wobei der Hauptkörper einen ersten Endteil umfasst und einen zweiten Endteil umfasst;
wobei der erste Endteil dafür gestaltet ist, mit einem ersten Teil eines Vakuumschalters, Abgaskompensators oder Ventils verbunden zu werden;
wobei der zweite Endteil dafür gestaltet ist, mit einem zweiten Teil des Vakuumschalters, des Abgaskompensators oder des Ventils verbunden zu werden;
wobei der Hauptkörper einen flexiblen Abschnitt umfasst; wobei der flexible Abschnitt so gestaltet ist, dass sich der erste Endteil relativ zu dem zweiten Endteil bewegen kann;
wobei wenigstens ein Teil einer Innenoberfläche des flexiblen Abschnitts ein zweites Material (84) umfasst, das von dem ersten Material verschieden ist; und/oder wobei wenigstens ein Teil einer Außenoberfläche des flexiblen Abschnitts das zweite Material umfasst;
wobei der Faltenbalg für einen Vakuumschalter ist und wobei das zweite Material eine galvanische Beschichtung aus: Chrom oder Nickel umfasst; oder wobei der Faltenbalg für einen Abgaskompensator oder ein Ventil ist und wobei das zweite Material eine galvanische Beschichtung aus: Chrom, Nickel-Zink oder Zinn umfasst; **dadurch gekennzeichnet, dass** wenigstens ein Teil der Innenoberfläche des flexiblen Abschnitts ein drittes Material umfasst, das von dem ersten Material verschieden ist und von dem zweiten Material verschieden ist; und/oder wobei wenigstens ein Teil der Außenoberfläche des flexiblen Abschnitts das dritte Material umfasst.

2. Faltenbalg gemäß Anspruch 1, wobei eine Dicke des zweiten Materials in dem Bereich von 0,5um bis 100 µm liegt.

3. Faltenbalg gemäß einem der Ansprüche 1-2, wobei eine Dicke des zweiten Materials für die Innenoberfläche von einer Dicke des zweiten Materials für die Außenoberfläche verschieden ist; oder wobei eine Dicke des zweiten Materials für die Innenoberfläche gleich ist wie eine Dicke des zweiten Materials für die Außenoberfläche.

4. Faltenbalg gemäß einem der Ansprüche 1-3, wobei eine Härte des zweiten Materials kleiner als eine Härte des ersten Materials ist.

5. Faltenbalg gemäß einem der Ansprüche 1-4, wobei der wenigstens eine Teil der Innenoberfläche des flexiblen Abschnitts, der das zweite Material umfasst, auch das dritte Material umfasst; und/oder der wenigstens eine Teil der Außenoberfläche des flexiblen Abschnitts, der das zweite Material umfasst, auch das dritte Material umfasst.

6. Faltenbalg gemäß einem der Ansprüche 1-5, wobei eine Dicke des dritten Materials in dem Bereich von 0,5 µm bis 100 µm liegt.

7. Faltenbalg gemäß Anspruch 6, wobei eine Dicke des dritten Materials für die Innenoberfläche von einer Dicke des dritten Materials für die Außenoberfläche verschieden ist; oder wobei eine Dicke des dritten Materials für die Innenoberfläche gleich ist wie eine Dicke des dritten Materials für die Außenoberfläche.

8. Faltenbalg gemäß einem der Ansprüche 1-7, wobei eine Härte des dritten Materials kleiner als eine Härte des ersten Materials ist.

9. Faltenbalg gemäß einem der Ansprüche 1-8, wobei der Faltenbalg für einen Vakuumschalter ist und wobei das dritte Material eine galvanische Beschichtung aus: Gold, Silber, Chrom oder Nickel umfasst; oder wobei der Faltenbalg für einen Abgaskompensator oder ein Ventil ist und wobei das dritte Material eine galvanische Beschichtung aus: Gold, Silber, Chrom, Nickel-Zink oder Zinn umfasst.

10. Faltenbalg gemäß einem der Ansprüche 1-9, wobei das dritte Material durch eine Oberflächenbehandlung des ersten materials gebildet ist.

11. Vakuumschalter, Abgaskompensator oder Ventil, umfassend einen Faltenbalg gemäß einem der Ansprüche 1-10.

## Revendications

1. Soufflet (80) pour un interrupteur à vide, un compensateur d'échappement ou une soupape, le soufflet comprenant :
un corps principal comprenant un premier matériau (82) ; le premier matériau étant de l'acier inoxydable ;
le corps principal comprenant une première partie d'extrémité et comprenant une seconde partie d'extrémité ;
la première partie d'extrémité étant configurée pour être connectée à une première partie d'un interrupteur à vide, d'un compensateur d'échappement ou d'une soupape ;
la seconde partie d'extrémité étant configurée pour être connectée à une seconde partie de l'interrupteur à vide, du compensateur d'échappement ou de la soupape ;
le corps principal comprenant une section flexible ;
la section flexible étant configurée de manière à ce que la première partie d'extrémité puisse se déplacer par rapport à la seconde partie d'extrémité ;
au moins une partie d'une surface intérieure de la section flexible comprenant un deuxième matériau (84) différent du premier matériau ; et/ou au moins une partie de la surface extérieure de la section flexible comprenant le deuxième matériau ;
le soufflet étant destiné à un interrupteur à vide et le deuxième matériau comprenant un revêtement galvanique de chrome ou de nickel ; ou le soufflet étant destiné à un compensateur d'échappement ou à une soupape et le deuxième matériau comprenant un revêtement galvanique de chrome, de nickel, de zinc ou d'étain ; **caractérisé en ce qu'**au moins une partie de la surface intérieure de la section flexible comprend un troisième matériau différent du premier matériau et différent du deuxième matériau ; et/ou au moins une partie de la surface extérieure de la section flexible comprenant le troisième matériau.

2. Soufflet selon la revendication 1, une épaisseur du deuxième matériau étant comprise entre 0.5 µm et 100 µm.

3. Soufflet selon l'une quelconque des revendications 1 et 2, une épaisseur du deuxième matériau pour la surface intérieure étant différente d'une épaisseur du deuxième matériau pour la surface extérieure ; ou une épaisseur du deuxième matériau pour la surface intérieure étant la même qu'une épaisseur du deuxième matériau pour la surface extérieure.

4. Soufflet selon l'une quelconque des revendications 1 à 3, une dureté du deuxième matériau étant inférieure à une dureté du premier matériau.

5. Soufflet selon l'une quelconque des revendications 1 à 4, l'au moins une partie de la surface intérieure de la section flexible qui comprend le deuxième matériau comprenant également le troisième matériau ; et/ou l'au moins une partie de la surface extérieure de la section flexible qui comprend le deuxième matériau comprenant également le troisième matériau.

6. Soufflet selon l'une quelconque des revendications 1 à 5, une épaisseur du troisième matériau étant comprise entre 0,5 um et 100 µm.

7. Soufflet selon la revendication 6, une épaisseur du troisième matériau pour la surface intérieure étant différente d'une épaisseur du troisième matériau pour la surface extérieure ; ou une épaisseur du troisième matériau pour la surface intérieure étant la même qu'une épaisseur du troisième matériau pour la surface extérieure.

8. Soufflet selon l'une quelconque des revendications 1 à 7, une dureté du troisième matériau étant inférieure à une dureté du premier matériau.

9. Soufflet selon l'une quelconque des revendications 1 à 8, le soufflet étant destiné à un interrupteur à vide et le troisième matériau comprenant un revêtement galvanique d'or, d'argent, de chrome ou de nickel ; ou le soufflet étant destiné à un compensateur d'échappement ou à une soupape et le troisième matériau comprenant un revêtement galvanique d'or, d'argent, de chrome, de nickel, de zinc ou d'étain.

10. Soufflet selon l'une quelconque des revendications 1 à 9, le troisième matériau étant formé à partir d'un traitement de surface du premier matériau.

11. Interrupteur à vide, compensateur d'échappement ou soupape, comprenant un soufflet selon l'une quelconque des revendications 1 à 10.
